Europäisches Patentamt

European Patent Office

Office européen des brevets

(19)

(11) Veröffentlichungsnummer : **0 038 978**
**B1**

(12) **EUROPÄISCHE PATENTSCHRIFT**

(45) Veröffentlichungstag der Patentschrift :
04.07.84

(21) Anmeldenummer : **81102751.5**

(22) Anmeldetag : **10.04.81**

(51) Int. Cl.³ : **B 60 C 23/00**, B 60 C 23/04,
G 01 L 17/00

(54) **Druckregelvorrichtung mit Anzeige für mindestens zwei miteinander druckseitig verbundene Druckgefässe.**

(30) Priorität : **30.04.80 CH 3361/80**

(43) Veröffentlichungstag der Anmeldung :
**04.11.81 Patentblatt 81/44**

(45) Bekanntmachung des Hinweises auf die Patenterteilung : **04.07.84 Patentblatt 84/27**

(84) Benannte Vertragsstaaten :
**AT BE CH DE FR GB IT LI LU NL SE**

(56) Entgegenhaltungen :
**DE-A- 1 475 924**
**FR-A- 1 508 010**
**US-A- 2 059 045**

(73) Patentinhaber : **BOA A.G. Luzern**
**Kellerstrasse 45**
**CH-6002 Luzern (CH)**

(72) Erfinder : **Mattman, Beat**
**Maihofmatte 9**
**CH-6006 Luzern (CH)**
Erfinder : **Dreyer, Marco**
**Oberhaslistrasse 7**
**CH-6005 St.Niklausen (CH)**
Erfinder : **Marti, Wilhelm**
**Rosenfeldweg 12**
**CH-6048 Horw, Schweiz (CH)**

(74) Vertreter : **Blum, Rudolf Emil Ernst et al**
**c/o E. Blum & Co Patentanwälte Vorderberg 11**
**CH-8044 Zürich (CH)**

Jouve, 18, rue St-Denis, 75001 Paris, France

## Beschreibung

Die Erfindung betrifft eine mit einer Anzeige versehene Druckregelvorrichtung für mindestens zwei miteinander druckseitig verbundene Druckgefässe mit den Merkmalen des Oberbegriffs des Anspruchs 1. Eine derartige Vorrichtung ist aus der US-A-2059045 bekannt.

In der CH-PS 570 281 ist eine weitere Einrichtung zur Ueberwachung des Druckes in einem oder mehreren unter gleichem Druck stehender Fahrzeugluftreifen offenbart, wobei der oder die Reifen durch Kanäle mit der Druckkammer eines ein Ventilglied aufweisenden Steuergerätes verbunden ist bzw. sind. Dabei führt der eine Kanal unmittelbar in die Druckkammer, währenddem ein anderer Kanal zum Ventilsitz führt. Diese Einrichtung weist die Eigenschaft auf, dass falls derjenige Fahrzeugluftreifen, der mit dem zum Ventilsitz führenden Kanal mit der Einrichtung verbunden ist, defekt wird und Druck verliert, auch der andere Reifen einen Druckverlust bis zum Schliessdruck des Ventils erleidet.

Ein Nachteil der bekannten Druckregelvorrichtungen ergibt sich nun dadurch, dass im unbeschädigten Reifen der Druck beispielsweise durch Walkarbeit oder starke Sonneneinstrahlung wieder ansteigt, dies kann zum erneuten Oeffnen des Ventilglieds führen und damit bewirken, dass aus dem unbeschädigten Fahrzeugreifen eine weitere Menge Luft in den beschädigten Reifen strömt, bis das Ventilglied wieder schliesst. Somit ergibt sich eine weitere Druckverminderung im unbeschädigten Reifen, welches zu unzulässigen Betriebszuständen und schliesslich zur Beschädigung des Reifens führt.

Hier will die Erfindung Abhilfe schaffen. Die Erfindung, wie sie im Anspruch 1 gekennzeichnet ist, schafft eine Druckregelvorrichtung, bei welcher nach erfolgtem Trennen der Druckgefässe von der Drucksteuerkammer eine erneute Verbindung der Druckgefässe mit der Drucksteuerkammer auch dann geschlossen bleibt, wenn in einem der Druckgefässe wieder eine Druckerhöhung, allenfalls sogar über den Betriebsdruck derselben hinaus, auftritt.

Die durch die Erfindung erreichten Vorteile sind im wesentlichen darin zu sehen, dass bei einmal erfolgter Trennung der Druckgefässe die gegenseitige Verbindung in jedem Fall unterbrochen bleibt. Somit ist sichergestellt, dass nicht irrtümlicherweise in einem Druckgefäss ein Druckverlust entsteht.

Im folgenden wird die Erfindung anhand von einen Ausführungsweg darstellenden Zeichnungen näher erläutert. Es zeigt:

Figur 1 einen vertikalen Schnitt durch eine Druckregelvorrichtung,

Figur 2 eine Aufsicht auf die in der Fig. 1 gezeigte Druckregelvorrichtung,

Figur 3 einen Schnitt durch einen unteren Teil der Druckregelvorrichtung der Fig. 1,

Figur 4 in vergrössertem Massstab, einen Schnitt durch ein Schliessventil,

Figur 5 eine Darstellung der Druckanzeige und

Figur 6 eine vereinfachte Vorderansicht der Druckanzeige.

Das Ausführungsbeispiel wird anhand einer Verwendung für doppelt bereifte Kraftfahrzeugreifen beschrieben. Die Druckregelvorrichtung ist jedoch für eine Verwendung mit Druckgefässen allgemeiner Bauart geeignet. Obwohl in dieser Beschreibung das unter Druck stehende Fluid Luft, also gasförmig ist, ist die Druckregelvorrichtung auch zum Betrieb mit anderen Fluiden geeignet.

Die Druckregelvorrichtung weist einen Gehäuseblock 1 auf, auf welchem ein Gehäusezylinder 2 aufgesetzt ist. Der Gehäusezylinder 2 ist mit einem Abschlussdeckel 9 versehen. Im Gehäusezylinder 2 ist eine Drucksteuerkammer 3 angeordnet.

Die Aussenwand dieser Drucksteuerkammer 3 ist von einem Faltenbalg 4 beschrieben, in welchem ein Hülsenkörper 5 angeordnet ist.

Das untere Ende des Faltenbalgs 4 ist bei 6 mit dem Gehäuseblock 1 luftdicht verbunden. Das obere Ende des Faltenbalgs ist bei 7 mit einem Ring 8 luftdicht verbunden, der seinerseits mit dem Hülsenkörper 5 luftdicht verbunden ist. Dieser Ring 8 weist eine gegen die Drucksteuerkammer 3 gerichtete Kolbenfläche 10 auf. Auf dem Hülsenkörper 5 ist ein Zapfen 11 aufgesetzt, der in eine Ausnehmung 12 des Abschlussdeckels 9 ragt und darin längsverschiebbar geführt ist.

Vom unteren Ende des Hülsenkörpers 5 erstreckt sich eine hohle Steuerstange 13 in den Gehäuseblock 1, die darin längsverschiebbar geführt ist. Diese Steuerstange 13 weist bei ihrem unteren Endabschnitt eine ringförmige Ausnehmung 44 auf.

Im Hülsenkörper 5 ist eine Schraubenfeder 14 angeordnet. Ihr oberer Endabschnitt 15 ist mit dem Zapfen 11 fest verbunden und ihr unterer Endabschnitt 16 ist mit einer Stange 17 verbunden. Diese Stange 17 durchdringt koaxial die hohle Steuerstange 13 und auf ihrem unteren Ende ist eine Stellmutter 18 aufgeschraubt, die sich über eine Unterlagsscheibe 19 auf dem Gehäuseblock 1 abstützt. Somit kann die als Zugfeder wirkende Feder 14 vorgespannt, und die von ihr auf den Zapfen 11 wirkende Kraft gewählt werden. Es ist offensichtlich, dass die Kraft der Feder 14 der auf den Federbalg 4 einwirkenden Druckkraft der sich in der Steuerkammer 3 befindlichen Druckluft entgegenwirkt. Dabei ist der Ordnung halber zu bemerken, dass der Innenraum des Hülsenkörpers 5 druckseitig in Verbindung mit dem vom Aussenmantel des Hülsenkörpers 5 und dem Innenmantel des Faltenbalgs 4 beschriebenen Ringraum steht, also in diesen Räumen immer jeweils derselbe Druck vorherrscht.

Der Gehäuseblock 1 weist einen ersten Verbindungskanal 20 und einen zweiten Verbindungskanal 21 auf. Der erste Verbindungskanal 20 erstreckt sich durch eine Verbindungsmutter 22, die mit einem Koppelglied 23 zum Einsetzen in einem elastomeren Schlauch 24 ausgerüstet ist. Der Schlauch 24 ist nur schematisch dargestellt und führt zu einem Druckgefäss 25, das beim vorliegenden Ausführungsbeispiel ein Luftreifen eines doppeltbereiften Lastkraftwagens ist. Der zweite Verbindungskanal 21 erstreckt sich in gleicher Weise durch eine Verbindungsmutter 26 mit Koppelglied 27. Weiter sind der elastomere Schlauch 28 und das andere Druckgefäss 29, bzw. Luftreifen, wieder schematisch dargestellt.

Beim unteren Teil des Gehäuseblocks 1 ist eine Mutter 30 aufgeschraubt, mittels welcher der Gehäuseblock 1 mit einem Träger 31 verbunden ist, welcher beim vorliegenden Ausführungsbeispiel mit der Felge (nicht gezeigt) des Lastkraftwagens verbunden ist.

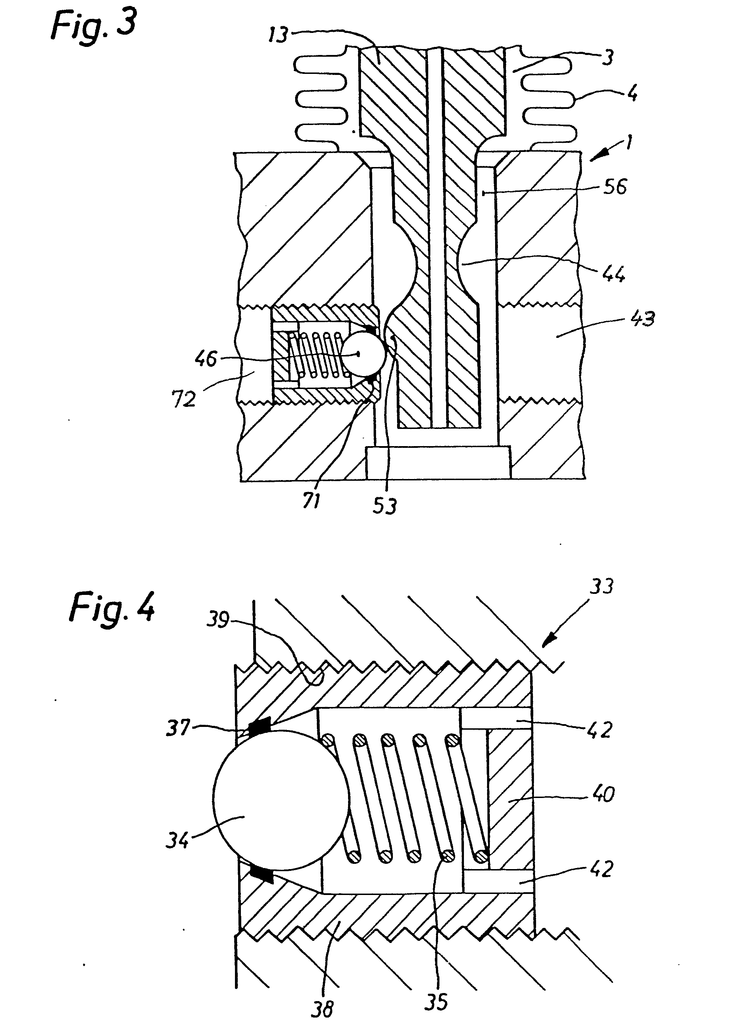

In den Verbindungskanälen 20, 21 im Gehäuseblock 1 sind Schliessventile 32 bzw. 33 eingesetzt. Weil beide Schliessventile 32, 33 gleich als Rückschlagventile ausgebildet sind, wird nachfolgend nur das Schliessventil 33 beschrieben, wozu insbesondere auf Fig. 4 Bezug genommen ist, in der das Schliessventil 33 in grösserem Massstab gezeichnet ist.

Das Schliessventil 33 weist einen kugelförmigen Schliessteil 34 auf. Dieser Schliessteil 34 ist mittels einer Druckfeder 35 gegen einen elastomeren Dichtungsring 37 vorgespannt.

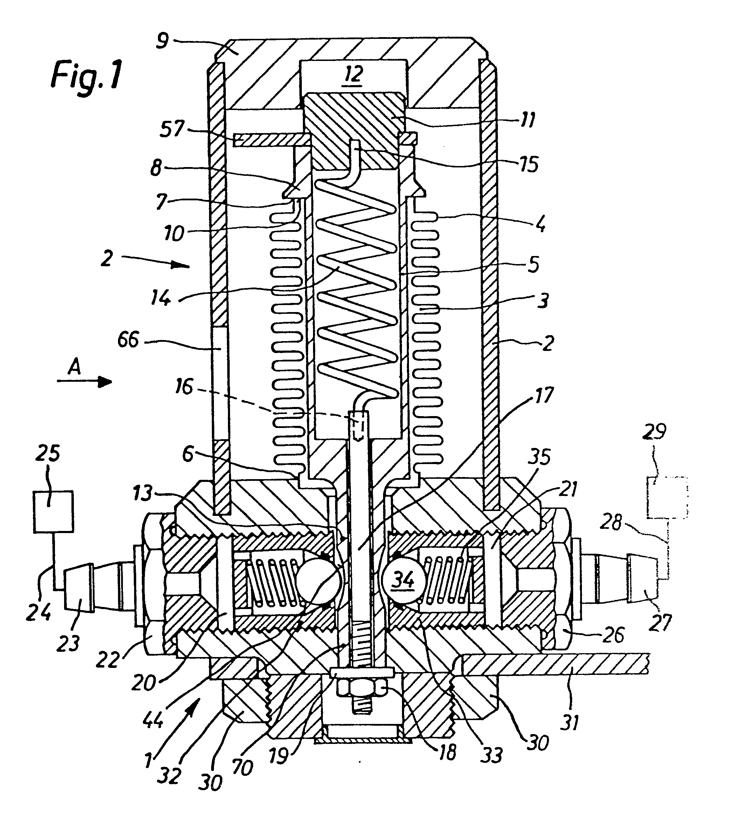

Der Träger 38 weist ein Aussengewinde 39 auf, welches im Verbindungskanal 21 eingeschraubt ist. Die Feder 35 ist auf den Bodenteil 40 des Trägers 38 abgestützt. Der Träger 38 weist am Bodenteil 40 Durchtrittslöcher 42 für die Luft auf. In der in Fig. 1 gezeigten Schliessstellung der Schliessventile 32, 33 ist jeweils ihr kugelförmiger Schliessteil 34 in der Ausnehmung 44 der Steuerstange 13 angeordnet, berührt diese jedoch nicht, sondern stützt sich auf den Dichtungsring 37 ab.

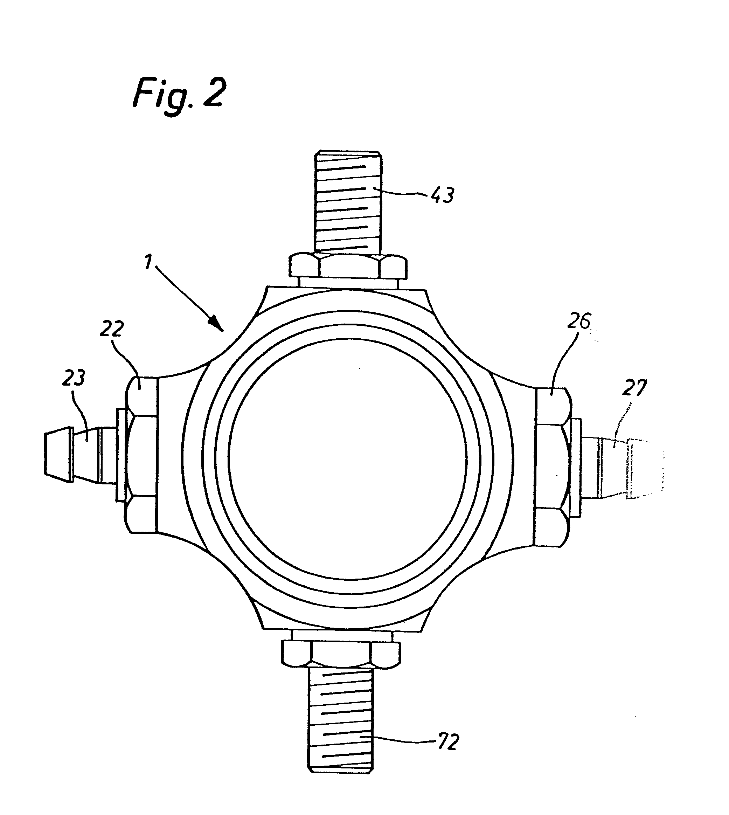

Der Gehäuseblock 1 weist weiter einen Lufteinfüllstutzen 43 auf, der im Gehäuseblock eingeschraubt ist. Siehe hierzu Fig. 2.

Dem Lufteinfüllstutzen 43 gegenüberliegend ist ein Luftauslassstutzen 72 angeordnet. In diesem Luftauslassstutzen 72 ist ein weiteres Rückschlagventil vorhanden, welches gleich den im Zusammenhang mit der Fig. 4 beschriebenen Rückschlagventilen ausgebildet ist. Insbesondere ist ebenfalls ein federbelasteter, kugelförmiger Schliessteil 46 vorhanden, der in Schliessstellung auf einem Dichtungsring 71 anliegt. Diese Teile sind in der Fig. 3 dargestellt. Dabei weist das unterste Ende der Steuerstange 13 eine Steuernase 53 auf. Bewegt sich die Steuerstange 13 gegen ihre untere Endstellung, so läuft die Steuernase 53 auf den Schliessteil 46 auf, womit dieser gegen die Federkraft vom Dichtungsring 71 weg verschoben wird und somit das Rückschlagventil im Luftauslassstutzen 72 geöffnet wird.

Beim Einfüllen der Luft strömt diese also durch einen Einfüllstutzen 43, der in bekannter Weise ein Rückschlagventil (nicht gezeigt) aufweist, strömt durch den zwischen der Steuerstange 13 und dem Gehäuseblock 1 gebildeten Ringraum 56 und in die Steuerkammer 3.

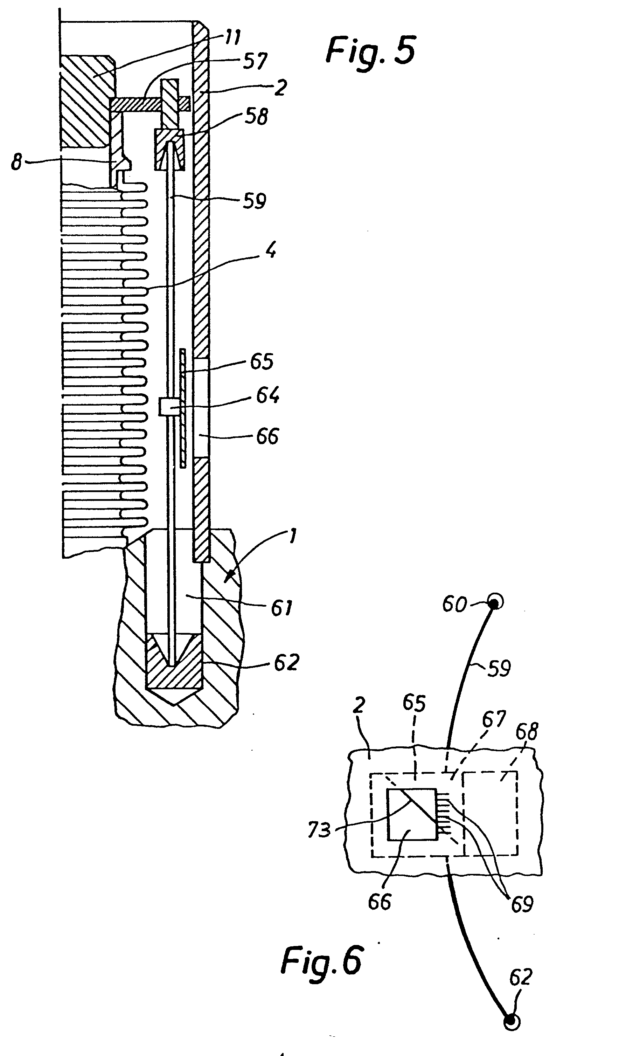

Nachfolgend wird unter Bezugnahme auf die Fig. 5 und 6 die Druckanzeige erläutert. Vom Zapfen 11 der Steuerkammer 3 (siehe auch Fig. 1) steht ein Traggglied 57 seitlich ab. Das Traggglied 57 trägt einen Zapfen 58, in welchem eine leicht vorgespannte Stabfeder 59 angebracht ist. Das entgegengesetzte, untere Ende der Stabfeder 59 ragt in ein Sackloch 61 im Gehäuseblock 1, in welchen der Zapfen 62 eingepresst ist.

Die Stabfeder 59 ist zudem mittels eines zweiten Zapfens 64 mit einer Anzeigeplatte 65 verbunden. Anstelle der Stabdefer 59 können auch zwei Lenker vorhanden sein, die miteinander einen stumpfen Winkel einschliessen und beim Zapfen 58 bzw. 62 angelenkt sind, und weiter beim Zapfen 64 aneinander angelenkt sind.

Beim Bereich der Anzeigeplatte 65 ist im Gehäusezylinder 2 ein Sichtfenster 66 ausgebildet.

Die Stabfeder 59 ist in jeder Stellung der Steuerstange 13 relativ zum Gehäuseblock 1 um einen kleinen Betrag seitlich ausgelenkt, wie dies in Fig. 6 übertrieben gezeichnet ist.

Es wird nun Bezug auf die Fig. 6 genommen, welche eine vereinfachte Ansicht in Richtung des Pfeils A der Fig. 1 auf einen Abschnitt des Gehäusezylinders 2 ist, in welchem ein Sichtfenster 66 ausgeschnitten ist. Ein Teil der Anzeigeplatte 65 ist durch das Sichtfenster 66 sichtbar. Die Anzeigeplatte 65 weist z. B. ein grün gefärbtes Feld 67 und ein daran anschliessendes rot gefärbtes Feld 68 auf. Auf dem grün gefärbten Feld 67 ist eine schräg verlaufende, z. B. schwarze Linie 73 aufgebracht, die mit an einen Rand des Fensters 66 angebrachten Markierungen 69 zusammenwirkt, um den in der Steuerkammer 3 jeweils vorhandenen Luftdruck anzuzeigen. Unterschreitet dieser Luftdruck einen vorbestimmten Wert, wird das rot gefärbte Feld 68 sichtbar.

Der Betrieb der Vorrichtung ist wie folgt. Man nehme an, dass in der Steuerkammer 3 und den zwei Luftreifen 25, 29 im Vergleich zum Nenndruck zu wenig Druck herrscht.

Der Lufteinfüllstutzen 43 wird mit einer Druckluftquelle verbunden. Somit strömt die Druckluft durch den Ringraum 56 in die Steuerkammer 3 ein. Man nehme an, diese sei für einen Nenndruck von 3 bar ausgelegt. Dieser Wert ergibt sich aus dem mittleren Querschnitt des Federbalgs 4 und der veränderbaren Vorspannung der Feder 14. Die Feder 14 ist als Zugfeder ausgebildet und wirkt der einwirkenden Druckkraft entgegen. Wird die Mutter 18 angezogen, erhöht sich die von der Feder 14 ausgeübte Gegenkraft.

Ueberschreitet der Druck der Luft den Schließdruck von z. B. 2, 3 bar bewegt sich der Ring 8 nach oben. Somit wird der Hülsenkörper 5 und insbesondere die Steuerstange 13 ebenfalls aufwärts bewegt. Somit entfernt sich die Ausnehmung 44 der Steuerstange 13 von den Schliessteilen 34 der Ventile 32, 33. Die Schliessteile 34 liegen somit am unteren Abschnitt 70 der Steuerstange 13 an und entfernen sich vom Ventilsitz (Dichtungsring 37). Damit ist die Verbindung zwischen der Steuerkammer 3 und den zwei Luftreifen 25, 29 hergestellt. Wird nun die Zufuhr von Druckluft zum Einfüllstutzen 43 unterbunden, schliesst das Rückschlagventil in bekannter Weise und der in der Steuerkammer 3 vorhandene Druck wird aufrechterhalten. Dabei bleiben die Ventile 32, 33 offen, weil die kugelförmigen Schliessteile 34 durch den Abschnitt 70 der Steuerstange 13 in Offenstellung gehalten werden. Entstehen nun Druckunterschiede in den Druckgefässen, d. h., der Luftreifen 25, 29, werden solche ständig ausgeglichen, weil die Luftreifen 25, 29 druckseitig miteinander verbunden sind.

Beginnt nun aus einem der Luftreifen 25, 29 Luft zu entweichen, so dass der Luftdruck unter den Wert von 3 bar fällt, beginnt sich die Steuerstange 13 durch Einwirken der Feder 14 nach unten zu bewegen. Die Ausnehmung 44 gibt die kugelförmigen Schliessteile 34 der Ventile 32, 33 frei, so dass beide Luftreifen 25, 29, also Druckgefässe, bei Erreichen eines Schliessdrucks von z. B. 2, 3 bar voneinander getrennt werden. Somit entsteht beim z. B. nicht schadhaften Luftreifen 25 kein weiterer Druckabfall. Offensichtlich ist dieser Schliessdruck derart gewählt, dass der nicht schadhafte Luftreifen 25 einen noch genügend sicheren Betriebsdruck aufweist.

Steigt nun z. B. durch Walken der Druck im nicht schadhaften Luftreifen 25 wieder an, kann dieser Druckanstieg die Ventile 32, 33 nicht mehr öffnen. Im Gegenteil, die Anpresskraft des Schliessteils 34 des Ventils 32 auf den Dichtungsring 37 (Ventilsitz) wird noch erhöht, so dass eine verstärkte druckseitige Trennung der zwei Luftreifen 25, 29 sichergestellt ist. Die Ventile 32, 33 können ausschliesslich durch eine erneute Zufuhr von Druckluft durch den Lufteinfüllstutzen 43 wieder geöffnet werden.

Durch die beschriebene Anordnung ist auch sichergestellt, dass bei einem schlagartigen Druckabfall (z. B. Pneuplatzer) die Ventile 32, 33 schlagartig schliessen, so dass der nicht schadhafte Reifen praktisch keinen Druckabfall erleidet.

Weil es wichtig ist, dass die geschlossenen Ventile 32, 33 nach erfolgtem Druckabfall dicht geschlossen bleiben, ist in dieser Ausführung eine Anordnung zum Erhöhen des Anpressdruckes der kugelförmigen Schliessteile 34 auf den Dichtungsring 37 vorhanden. Gemäss Fig. 3 bewegt die im Fall des Schliessens sich nach unten verschiebende Steuerstange 13 mittels der vorgängig beschriebenen Steuernase 53 den Schliesskörper 46 von seinem Sitz 71 weg, so dass in der Steuerkammer 3 Umgebungsdruck herrscht. Damit ist das bei den Ventilen 32, 33 vorhandene Druckgefälle noch höher, so dass der vorher genannte Anpressdruck der Schliessteile noch höher ist.

Die Funktionsweise der Anzeigevorrichtung wird nachfolgend anhand der Fig. 5 und 6 erklärt. Die leicht vorgespannte, also etwas ausgebogene Stabfeder 59 ist beim oberen Ende mittels des Zapfens 58 und Tragglieds 57 mit dem Zapfen 11 der Steuerkammer 3 und beim unteren Ende mittels des Zapfens 62 mit dem Gehäuseblock 1 verbunden. Verschiebt sich nun die Steuerstange 13 aufgrund einer Druckänderung in der Steuerkammer 3 relativ zum Gehäuseblock 1, biegt die Stabfeder 59 stärker aus, derart, dass die in Längsrichtung der Regelvorrichtung erfolgende Bewegung des oberen Endes der Stabfeder 59 in eine radial dazu erfolgende Bewegung ihres mittleren Bereiches umgesetzt wird, bei welchem mittleren Bereich die Anzeigeplatte 65 angeordnet ist und ebenfalls die in radialer (seitlicher) Richtung erfolgende Bewegung durchführt.

Mittels der diagonal verlaufenden Linie 73 auf dem grünen Feld 67, welches letztere die Betriebsstellung allgemein anzeigt, lässt sich der vorherrschende Druck mit Hilfe der am Rand des Sichtfensters 66 angebrachten Markierungen 69 ablesen. Nach Unterschreiten des Nenndruckes von beispielsweise 3 bar, erscheint zunehmend das rote Feld bis zum Erreichen des Schliessdruckes von beispielsweise 2, 3 bar, das somit den ungenügenden Reifendruck anzeigt.

Es ist auch eine Ausführung mit einer Fernanzeige bestimmter Druckzustände der Fahrzeugreifen in der Fahrerkabine vorgesehen. Dabei wird als Signal für die elektrische Fernanzeige die Stellung der Steuerstange 13 abgegriffen. Schliesslich ist zu bemerken, dass anstelle des Faltenbalgs 4 eine Membrane vorgesehen sein kann.

**Ansprüche**

1. Mit einer Anzeige versehene Druckregelvorrichtung für mindestens zwei miteinander druckseitig verbundene Druckgefäße (25, 29) mit einer Drucksteuerkammer (3), in die eine ein Einwegventil aufweisende Zufuhrleitung (43) für ein unter Druck stehendes Fluid und Verbindungskanäle (20, 21) zum Anschluß an die Druckgefäße (25, 29) münden, und einem in der Drucksteuerkammer (3) angeordneten Kolbenglied (8, 11), das in einer Richtung von der Druckkraft des Fluids und in der entgegengesetzten Richtung von der Kraft einer Druckfeder (14) beaufschlagt ist, wobei das Kolbenglied (8, 11) bei Druckabfall in der Drucksteuerkammer (3) vom normalen Betriebsdruck auf einen vorbestimmten Druckwert über Umgebungsdruck aus seiner Offenstellung, in der die Verbindungskanäle miteinander verbunden sind, in seine Schließstellung (Fig. 1) verstellt wird, in der die Verbindungskanäle voneinander getrennt sind, dadurch gekennzeichnet, daß in jedem Verbindungskanal (20, 21) ein Rückschlagventil (32, 33) angeordnet ist, das in der Offenstellung des Kolbenglieds (8, 11) von diesem geöffnet wird und in der Schließstellung des Kolbenglieds (8, 11) selbsttätig seine geschlossene Stellung einnimmt.

2. Vorrichtung nach Anspruch 1, dadurch gekennzeichnet, daß die Drucksteuerkammer (3) ein Raum mit kreisförmiger Querschnittsform ist, dessen Aussenwand von einem Federbalg (4) gebildet ist, und in welchem ein Hülsenkörper (5) angeordnet ist.

3. Vorrichtung nach Anspruch 2, dadurch gekennzeichnet, daß die Zufuhrleitung (43) mit dem Einwegventil und die Verbindungskanäle (20, 21) mit den Rückschlagventilen (32, 33) in einem Gehäuseblock (1) angeordnet sind, auf dem ein Gehäusezylinder (2) mit einem Abschlussdeckel (9) aufgesetzt ist und in dem der Federbalg (4) und der Hülsenkörper (5) angeordnet sind, und daß der Federbalg (4) an einem Ende mit dem Gehäuseblock (1) und am anderen Ende mittels eines ringförmigen Bauteils (8) mit dem Hülsenkörper (5) verbunden ist, der im Abschlussdeckel (9) längsverschiebbar geführt ist.

4. Vorrichtung nach Anspruch 3, dadurch gekennzeichnet, daß das Kolbenglied vom ringförmigen Bauteil (8) und einem Zapfen (11) gebildet ist, der auf dem Hülsenkörper (5) aufgesetzt und im Abschlussdeckel (9) längsverschiebbar geführt ist.

5. Vorrichtung nach Anspruch 4, dadurch gekennzeichnet, daß im Hülsenkörper (5) eine Feder (14) angeordnet ist, die an einem Ende (15) mit dem Zapfen (11) verbunden und am anderen Ende (16) im Gehäuseblock (1) abgestützt ist.

6. Vorrichtung nach Anspruch 5, dadurch gekennzeichnet, daß der Hülsenkörper (5) eine in den Gehäuseblock (1) ragende Steuerstange (17) zum Steuern der Rückschlagventile (32, 33) aufweist.

7. Vorrichtung nach Anspruch 6, dadurch gekennzeichnet, daß die Zugfeder (14) mittels einer Verstelleinrichtung zum Aendern ihrer Vorspannung im Gehäuseblock (1) abgestützt ist und daß die Verstelleinrichtung einen die Steuerstange (17) koaxial durchsetzenden, an einem Ende mit der Zugfeder verbundenen und am entgegengesetzten Ende mit einer Stellmutter (18) versehenen Stangenteil aufweist.

8. Vorrichtung nach Anspruch 7, dadurch gekennzeichnet, daß jedes Rückschlagventil einen verschiebbaren Schliessteil (34) aufweist, dessen Verschieberichtung mit der Verschieberichtung der Steuerstange (17) einen Winkel einschliesst, daß die Steuerstange eine in Umfangsrichtung derselben verlaufende Ausnehmung (44) aufweist, wobei in Schließstellung der Rückschlagventile ihr Schliessteil (34) jeweils berührungsfrei in die Ausnehmung (44) ragt.

9. Vorrichtung nach Anspruch 8, dadurch gekennzeichnet, daß die Steuerstange (17) eine einem Auslassventil zugeordnete Steuernase (53) aufweist, die das Auslassventil derart steuert, daß bei Schließstellung der Rückschlagventile (32, 33) das Auslassventil in Offenstellung ist, derart, daß die Drucksteuerkammer entlüftet ist.

10. Vorrichtung nach Anspruch 4, dadurch gekennzeichnet, daß der Zapfen (11) des Hülsenkörpers mittels eines seitlich auslenkbaren Verbindungsgliedes (59) mit dem Gehäuseblock (1) verbunden ist, das bei einer Verschiebung des Zapfens seitlich dazu ausbiegt.

11. Vorrichtung nach Anspruch 10, dadurch gekennzeichnet, daß das Verbindungsglied (59) mit einer Sichtanzeigevorrichtung (65) verbunden ist; welche den in der Drucksteuerkammer vorherrschenden Druck und die Stellung der Steuerstange (17) bzw. der Rückschlagventile anzeigt, und daß die Steuerstange mit Bauteilen zum Steuern eines Fernanzeigegerätes versehen ist.

## Claims

1. A pressure control means for at least two pressure-wise interconnected pressure vessels (25, 29), including a display means, having a pressure control chamber (3) connected to a pressure fluid feed line (43) provided with a check valve, and to connection channels (20, 21) intended for connection to said pressure vessels (25, 29), and including a piston member (8, 11) located in the pressure control chamber and acted upon in one direction by the pressure force of the fluid and in the opposite direction by the force of a pressure spring (14), which piston member (8, 11) upon a pressure loss in the pressure control chamber from the normal operating pressure to a predetermined pressure value above ambient pressure is operated from its open position, in which the connection channels are in communication with each other into its closed position (Fig. 1), in which the connection channels are separated from each other, characterized in that each connection channel (20, 21) is provided with a check valve (32, 33) which in the open position of the piston member (8, 11) is opened by such, and in the closed position of the piston member (8, 11) moves on its own into its closed position.

2. The pressure control means of claim 1, characterized in that the pressure control chamber (3) describes a space of circular cross section having its jacket defined by a spring bellows (4), inside of which there is arranged a sleeve body (5).

3. The pressure control means of claim 2, characterized in that the pressure fluid feed line (43) including the check valve and the connection channels (20, 21) including the check valves (32, 33) are located in a housing block (1), onto which a cylindrical casing (2) provided with a closure cap (9) is mounted, and in which the spring bellows (4) and the sleeve body (5) are mounted, and in that the spring bellows (4) is connected at one end to the housing block (1) and at the other end by means of an annular member (8) to the sleeve body (5) which is guided longitudinally displaceable within the closure cap (9).

4. The pressure control means of claim 3, characterized in that the piston member is constituted by the annular member (8) and by a plug (11) mounted onto the sleeve body (5) and guided longitudinally displaceable within the closure cap (9).

5. The pressure control means of claim 4, characterized in that a spring (14) is located within the sleeve body (5) which is connected at one end (15) to the plug (11) and is supported at the other end (16) within the housing block (1).

6. The pressure control means of claim 5, characterized in that the sleeve body (5) comprises a control rod (17) projecting into the housing block (1) and intended to control the check valves (32, 33).

7. The pressure control means of claim 6, characterized in that the tension spring (14) is supported via a device for adjusting its bias within the housing block (1), and in that the bias adjusting device comprises a rod section extending coaxially through the control rod (17) and connected at one end to the tension spring and carrying at the other end an adjusting nut (18).

8. The pressure control means of claim 7, characterized in that each check valve comprises a displaceable closure body (34), the direction of movement of which extending at an angle to the direction of movement of the control rod (17), in that the control rod comprises a circumferentially extending recess (44), whereby the valve body (34) of each check valve extends in the closed position thereof freely into the recess (44).

9. The pressure control means of claim 8, characterized in that the control rod (17) is provided with a control cam (53) allocated to a discharge valve and operating the discharge valve such that in the closed position of the check valves (32, 33) the discharge valve is operated into its open position such that the pressure control chamber is vented.

10. The pressure control means of claim 4, characterized in that the plug (11) of the sleeve body is connected to the housing block (1) by means of a laterally deflectable connecting link (59) which upon a movement of the plug deflects laterally thereto.

11. The pressure control means of claim 10, characterized in that the connecting link (59) is coupled to a visual display means (65) which displays the pressure prevailing within the pressure control chamber and the position of the control rod (17) and check valves, respectively, and that the control rod is provided with structural members for controlling a remotely located display means.

**Revendications**

1. Dispositif de réglage de pression pour au moins deux réservoirs de pression (25, 29) reliés l'un à l'autre du côté de pression et présentant un indicateur, dispositif comprenant une chambre de contrôle de pression (3), dans laquelle mènent une conduite d'amenée (43), présentant une soupape à une voie pour un fluide sous pression, et des canaux (20, 21) prévus à son raccordement aux réservoirs de pression (25, 29), et un organe piston (8, 11) disposé dans la chambre de contrôle de pression (3), cet organe étant actionné dans une direction par la force de pression du fluide et dans la direction opposée par la force d'un ressort à compression (14), ledit organe piston (8, 11) étant déplacé, lors d'une chute de pression dans la chambre de contrôle de pression (3) de la chambre d'opération normale à une valeur de la pression prédéterminée au-dessus de la pression ambiante de sa position ouverte, dans laquelle les canaux de raccordement sont raccordés l'un à l'autre, dans sa position fermée (Fig. 1), dans laquelle les canaux de raccordement sont séparés l'un de l'autre, caractérisé en ce qu'une soupape de retenue (32, 33) est disposée dans chaque canal de raccordement (20, 21), soupape qui dans la position ouverte de l'organe piston (8, 11) est ouverte par ce dernier et qui dans la position fermée de l'organe piston (8, 11) occupe automatiquement une position fermée.

2. Dispositif selon la revendication 1, caractérisé en ce que la chambre de contrôle de pression (3) est un volume à section circulaire dont la paroi extérieure est formée par armature flexible à ressort (4) et dans lequel une douille (5) est disposée.

3. Dispositif selon la revendication 2, caractérisé en ce que la conduite d'amenée (43) avec sa soupape à une voie et les canaux de raccordement (20, 21) avec les soupapes de retenue (32, 33) sont disposés dans un bloc de boîtier (1) sur lequel est placé un cylindre du boîtier (2) avec un couvercle de fermeture (9) et dans lequel l'armature flexible à ressort (4) et la douille (5) sont arrangées, et en ce que l'armature (4) est fixée à une extrémité au bloc du boîtier (1) et à l'autre extrémité, au moyen d'un membre annulaire (8), à la douille (5) qui est guidée dans le couvercle de fermeture (9) de manière à pouvoir être déplacée longitudinalement.

4. Dispositif selon la revendication 3, caractérisé en ce que l'organe piston est formé par le membre annulaire (8) et un pivot (11) placé sur la douille (5) et guidé dans le couvercle de fermeture de manière à pouvoir être déplacé longitudinalement.

5. Dispositif selon la revendication 4, caractérisé en ce qu'un ressort (14) est disposé dans la douille (5), ressort qui à une extrémité (15) est relié au pivot (11) et s'appuie à l'autre extrémité au bloc de boîtier (1).

6. Dispositif selon la revendication 5, caractérisé en ce que la douille (5) présente une barre de commande (17) se projetant à l'intérieur du bloc de boîtier (1) pour commander les soupapes de retenue (32, 22).

7. Dispositif selon la revendication 6, caractérisé en ce que le ressort de compression (14) s'appuie sur le bloc de boîtier (1) au moyen d'un moyen de réglage pour ajuster sa prétention et en ce que le moyen de réglage présente une partie de barre traversant coaxialement la barre de commande (17) et connectée à une extrémité avec le ressort à compression et à l'extrémité opposée avec un écrou de réglage.

8. Dispositif selon la revendication 7, caractérisé en ce que chaque soupape de retenue présente un élément de fermeture (34) qui peut être déplacé et dont la direction de déplacement fait un angle avec la direction de déplacement de la barre de commande (1), et en ce que la barre de commande présente un évidement (44) le long de sa direction circonférentielle, le tout de manière à ce que dans la position de fermeture des soupapes de retenue son élément de fermeture (34) passe dans l'évidement (44) sans toucher.

9. Dispositif selon la revendication 8, caractérisé en ce que la barre de commande (17) présente un nez de commande (53) pour une soupape de sortie commandant la soupape de sortie de manière à ce que cette soupape soit en position ouverte lorsque les soupapes de retenue en position sont fermées pour ainsi aérer la chambre de contrôle de pression.

10. Dispositif selon la revendication 4, caractérisé en ce que le pivot (11) de la douille est relié au bloc de boîtier au moyen d'un élément de raccordement (59) qui peut être déplacé latéralement par rapport au pivot lorsque ce dernier se déplace.

11. Dispositif selon la revendication 10, caractérisé en ce que l'élément de raccordement (59) est relié à un dispositif indicateur optique (65) qui indique la pression à l'intérieur de la chambre de contrôle de pression et la position de la barre de commande (17) ou des soupapes de retenue respectivement, et en ce que la barre de commande est munie d'éléments pour commander un indicateur à distance.

# Fig.1

Fig. 2

# 0 038 978

*Fig. 3*

*Fig. 4*

3

0 038 978

Fig. 5

Fig. 6

4